Europäisches Patentamt

(19) European Patent Office

Office européen des brevets

(11) Numéro de publication: **0 098 796**
**B1**

(12) **FASCICULE DE BREVET EUROPÉEN**

(45) Date de publication du fascicule du brevet:
**05.11.86**

(51) Int. Cl.⁴: **G 01 L 9/08,** G 01 B 7/16

(21) Numéro de dépôt: **83810250.7**

(22) Date de dépôt: **09.06.83**

(54) Elément sensible pour capteur de contraintes et capteur en faisant application.

(30) Priorité: **01.07.82 FR 8211717**

(43) Date de publication de la demande:
**18.01.84 Bulletin 84/3**

(45) Mention de la délivrance du brevet:
**05.11.86 Bulletin 86/45**

(84) Etats contractants désignés:
**CH DE GB LI**

(56) Documents cité:
**US-A-4 148 530**

**PATENTS ABSTRACTS OF JAPAN, vol. 5, no. 146 (P-80)(818), 16 septembre 1981, Tokyo, JP.**

(73) Titulaire: **ASULAB S.A., Faubourg du Lac 6, CH-2501 Bienne (CH)**

(72) Inventeur: **Dinger, Rudolf, Charrières 7, CH-2024 St-Aubin (CH)**

(74) Mandataire: **Barbeaux, Bernard, SMH Société Suisse de Microélectronique et d'Horlogerie S.A. Département Brevets et Licences 6, Faubourg du Lac, CH-2501 Bienne (CH)**

## Description

La présente invention a pour objet un élément sensible pour capteur de contraintes et un capteur de pression en faisant application.

Par capteur de contraintes il faut entendre soit un appareil qui permet de mesurer une force à laquelle il est soumis soit encore un appareil qui permet de mesurer une contrainte mécanique ou une pression.

Pour la mesure de la pression atmosphérique et des changements de pression à l'aide d'un dispositif sous forme portative tel qu'un altimètre, on peut utiliser plusieurs effets. En général une capsule dans laquelle règne le vide et ayant des faces parallèles constituées par des membranes très élastiques sert de détecteur ou senseur. Dans un altimètre de type usuel la déformation du fond de la capsule due à la pression extérieure est amplifiée et transformée mécaniquement en un mouvement rotatif d'une aiguille par un train de roues dentées.

D'autre part on trouve actuellement sur le marché des capteurs piézo-résistifs constitués d'une membrane en cristal de silicium dans laquelle sont formées des résistances par diffusion. Lorsqu'une différence de pression existe entre les deux faces de la membrane la déformation qui en résulte provoque une variation de la résistance. Habituellement on réalise simultanément quatre résistances de façon à obtenir un circuit de mesure en forme de pont compensé en température, toutes les résistances ayant le même coefficient de température.

Tous ces détecteurs sont relativement coûteux car ils nécessitent un ajustage individuel très soigné. En outre la grandeur physique mesurée est transformée en une autre grandeur qui est analogique: angle ou variation de résistance. Récemment on a proposé dans la littérature (IEEE transaction on industrial electronics and control instrumentation, voiume IECI 25, numéro 1 février 1978, pages 29 à 38), de réaliser des capsules de détection de pression selon un montage en résonateur. La membrane sensible constitue un diaphragme vibrant et l'on exploite la fréquence de résonance de la capsule couplée à un oscillateur électronique, cette fréquence variant avec la pression extérieure appliquée à la capsule. Cependant la construction d'une telle capsule résonnante est très délicate et elle ne se prête pas à une production économique en très grande série.

Par ailleurs, il est connu par les demandes de brevets européen et japonais publiées respectivement sous les numéros 0 050 307 et 56-79 221 de réaliser des capteurs de contraintes en utilisant des résonateurs piézo-électriques.

La demande de brevet européen décrit en effet un capteur de forces dont l'élément sensible est constitué par un résonateur à quartz en forme de "double diapason" (cette forme sera décrite par la suite) ou de barreau qui porte des électrodes prévues pour le faire vibrer en flexion et dont les deux extrémités sont fixées sur des moyens de support auxquels est appliquée la force à mesurer.

Le capteur de la demande de brevet japonais est destiné, lui, à mesurer des pressions. Il comprend un boîtier dont l'intérieur est séparé en deux chambres par un diaphragme au centre duquel est fixée l'une des extrémités d'un résonateur qui a, là encore, la forme d'un double diapason et dont l'autre extrémité est liée rigidement au fond du boîtier. La chambre dans laquelle se trouve le résonateur est isolée de l'extérieur du boîtier alors que l'autre communique avec celui-ci pour pouvoir recevoir le fluide dont on veut connaître la pression.

Naturellement, dans les deux cas, le capteur est complété par un circuit électronique qui permet à la fois d'exciter le résonateur de manière adéquate, de déterminer la fréquence à laquelle il vibre et d'en déduire la valeur de la grandeur mesurée.

De tels capteurs présentent une très bonne sensibilité tout en étant peu encombrants. De plus, ils peuvent être fabriqués à bas prix du fait notamment que les résonateurs qu'ils utilisent peuvent être produits en grand nombre à la fois, à un prix de revient très faible, et que l'information fournie par ceux-ci peut être traitée par un circuit relativement simple et purement digital. L'inconvénient c'est qu'ils n'apportent aucune solution au problème lié à l'effet de la température et c'est précisément ce que l'invention a pour principal but de faire.

Ce but est atteint grâce au fait que dans le cas d'un élément sensible pour capteur de contraintes conforme à l'invention, qui comprend lui aussi un élément support, un résonateur allongé en matériau piézo-électrique muni d'électrodes et des moyens de fixation du résonateur sur l'élément de support pour transmettre les contraintes appliquées à cet élément support au résonateur, dans le sens de sa longueur, le résonateur en question est taillé dans le matériau piézo-électrique qui le constitue selon une coupe telle que son coefficient de dilatation thermique dans le sens de sa longueur soit sensiblement égal au coefficient de la dilatation thermique $\alpha$ de l'élément support.

Comme dans la demande de brevet européen précitée, ce resonateur a la structure d'un double diapason prévu pour travailler en flexion mais il peut en avoir d'autres, par exemple celle d'un barreau.

S'il est réalisé en quartz l'élément support peut être avantageusement constitué par une plaque métallique dont le coefficient de dilatation thermique est compris entre 7,5 et 13,7 . $10^{-6}(^\circ C)^{-1}$.

Comme on l'a déjà indiqué, l'invention a également pour objet un capteur de pression qui utilise un élément sensible de ce genre. Pour réaliser ce capteur on choisit comme élément support une plaque, on place l'élément sensible dans un boîtier de façon que, comme dans la demande de brevet japonais susmentionnée, la plaque constitue une cloison étanche qui divise l'intérieur du boîtier en deux chambres dans l'une desquelles on peut faire régner une pression à mesurer et on adjoint à cet ensemble un circuit pour faire vibrer le résonateur et recueillir le signal électrique qu'il fournit. Ainsi, lorsque la plaque est soumise à la pression dont on veut déterminer la valeur, la contrainte qui en résulte est transmise au résonateur qui voit alors sa fréquence propre modifiée de façon trés sensible en fonction de l'intensité de celle-ci. De plus, comme le choix de la coupe du résonateur permet de réduire très nettement l'effet de la température sur sa fréquence propre, il n'est pas utile de prévoir un ensemble particulier de compensation thermique dans le capteur.

D'autres caractéristiques et avantages de l'invention apparaîtront plus clairement à la lecture de la description qui suit de plusieurs modes de mise en oeuvre de l'invention donnés à titre d'exemple non limitatif. La description se réfère au dessin annexé dans lequel:

- la figure 1 est une vue en perspective simplifiée d'un premier mode de réalisation de l'élément sensible selon l'invention;

- la figure 2 est une vue de dessus du résonateur de l'élément sensible de la figure 1 montrant les métallisations formant les électrodes du résonateur;

- la figure 3 est une vue en perspective montrant l'angle de coupe $\theta$ du résonateur des figures 1 et 2;

- la figure 4 est une courbe montrant les variations de la température d'inversion du quartz en fonction de l'angle de coupe $\theta$ de la figure 3;

- la figure 5 est une vue en coupe verticale d'une variante de réalisation de l'élément sensible de la figure 1;

- la figure 6 est une vue partielle d'un capteur de pression permettant de mesurer une pression absolue;

- la figure 7 est un schéma du circuit électronique de traitement des signaux délivrés par le résonateur de la figure 6 pour afficher une pression;

- la figure 8 est un graphique montrant la variation de fréquence en fonction de la contrainte appliquée à un élément sensible tel que celui de la figure 1;

- la figure 9 est un graphique montrant l'influence de la température sur les variations de fréquence pour un élément sensible non conforme à l'invention c'est-à-dire de type classique; et

- la figure 10 montre en vue de dessus, un deuxième mode de réalisation du résonateur de l'élément sensible selon l'invention.

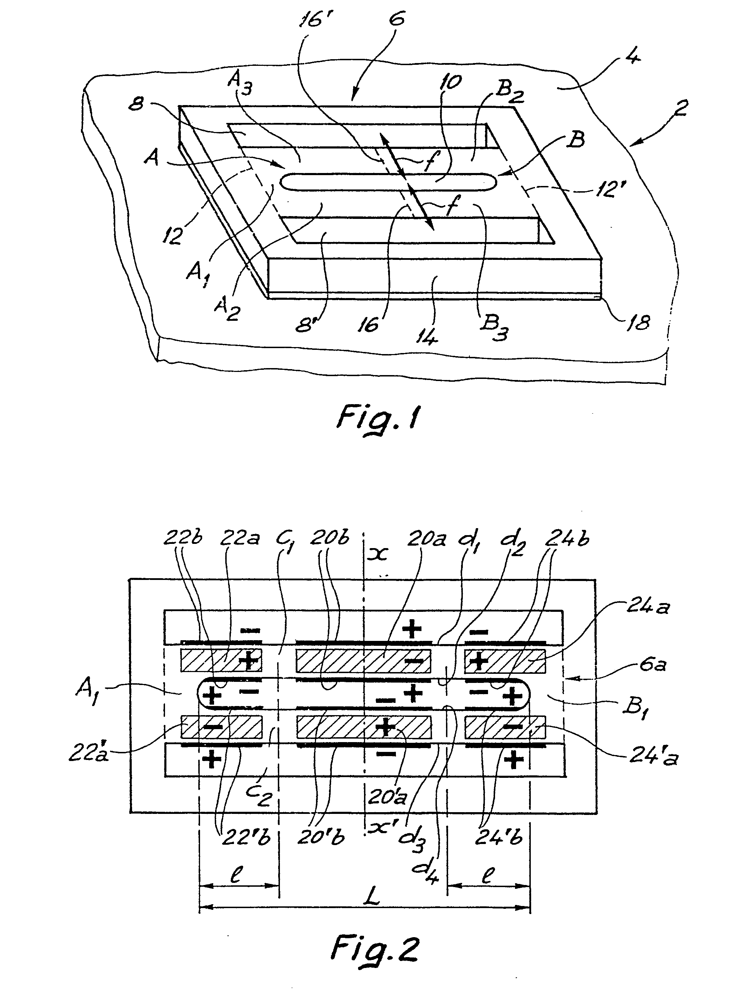

La figure 1 montre un premier mode de réalisation d'un élément sensible 2 selon l'invention. L'élément sensible se compose essentiellement d'un élément support formé ici par une plaque mince 4 sur laquelle est fixé un résonateur piézo-électrique 6 du type "double diapason". Plus précisément le résonateur a un contour extérieur sensiblement réctangulaire et il comporte deux fentes longitudinales 8 et 8' et une fente centrale 10 de longueur plus réduite. Les fentes 8, 8' ainsi que les lignes en pointillées 12 et 12' isolent une région centrale d'un, cadre périphérique rectangulaire 14. La région centrale constitue le résonateur proprement dit qui est l'équivalent de deux diapasons A et B dont les extrémités libres des branches seraient réunies deux à deux. On voit aisément que dans la région centrale la fente 10, les pointillés 12 et 12' et les pointillés 16 et 16' définissent effectivement le contour de deux diapasons. Par exemple, pour le diapason A, on trouve une base $A_1$ qui est solidaire du cadre 14 et des bras $A_2$ et $A_3$. De même pour le diapason B on trouve une base $B_1$ et des bras $B_2$ et $B_3$. Les extrémités libres des bras $A_2$ et $B_3$ sont réunies ainsi que les extrémités libres des bras $A_3$ et $B_2$. Une couche de colle ou de soudure 18 permet de fixer le résonateur 6 sur la plaque 4 par l'intermédiaire du cadre 14. Ainsi les contraintes ou déformations de la plaque 4 sont transmises intégralement au résonateur 6. Le résonateur constitué par le double diapason est excité pour vibrer en mode principal de flexion comme cela est symbolisé par les flèches f.

A titre d'exemple le résonateur 6 a une épaisseur de 125 µm, une longueur totale de 5 mm et une largeur totale de 1,3 mm. En outre la largeur totale des diapasons, c'est-à-dire la distance entre les fentes 8 et 8', est de l'ordre de 430 µm, la largeur de chaque bras est de l'ordre de 155 µm et la longueur totale L des bras du double diapason, c'est-à-dire la longueur de la fente centrale 10, est de 3,4 mm.

La figure 2 montre un mode possible de réalisation des électrodes pour exciter le double diapason en flexion. Pour simplifier la description de ces électrodes on appellera $C_1$ le barreau formant les bras $B_2$ et $A_3$ des diapasons et $C_2$ le barreau constitué par les bras $A_2$ et $B_3$ des diapasons. On appellera xx' la ligne qui passe par les traits en pointillés 16 et 16' et qui définit ainsi la séparation entre les deux diapasons, et 6a la face supérieure du résonateur, la face inférieure de ce même résonateur n'étant pas visible sur la figure 2. On appellera flancs les côtés des barreaux $C_1$ et $C_2$ qui sont perpendiculaires au plan de la figure 2 et donc à la face supérieure 6a du résonateur. En outre on appellera $d_1$ le flanc externe du barreau $C_1$ tandis que son flanc interne sera référencé $d_2$. De même, pour le barreau $C_2$ le flanc externe est référencé $d_3$ et son flanc interne $d_4$. Chaque barreau porte sur sa face supérieure une électrode centrale symétrique par rapport à la ligne xx' et des électrodes d'extrémité qui sont disposées à cheval sur une extrémité du barreau et sur la base $A_1$ ou $B_1$ des diapasons. On appellera 20a l'électrode centrale du barreau $C_1$ disposée sur la face supérieure de ce harreau et 20'a l'électrode correspondante pour le barreau $C_2$.

On appellera 22a et 24a les électrodes disposées aux extrémités de la face supérieure du barreau $C_1$, et 22'a et 24'a les électrodes disposées aux extrémités du barreau $C_2$. Il faut

comprendre que sur la face inférieure des barreaux $C_1$ et $C_2$ on trouve des électrodes identiques à celles qui sont disposées sur la face supérieure et faisant face à celles-ci. Chaque barreau comporte également des électrodes disposées sur ses flancs. On trouve une électrode sur chaque flanc au droit de chaque paire d'électrodes disposées sur les faces supérieures et inférieures. Sur les flancs $d_1$ et $d_2$ on trouve des électrodes latérales centrales 20b et des électrodes d'extrémité 22b et 24b. Pour simplifier la figure ces électrodes latérales sont représentées simplement par un trait plus fort. En ce qui concerne le barreau $C_2$ on trouve également sur ses flancs $d_3$ et $d_4$ des électrodes centrales 20'b et des électrodes d'extrémité 22'b et 24'b. Ainsi on trouve dans la région centrale de chaque barreau deux paires d'électrodes se faisant respectivement face et à chaque extrémité du barreau également deux paires d'électrodes se faisant respectivement face. A titre d'exemple la longueur de barreau 1 intéressée par une électrode d'extrémité est légérement inférieure au quart de la longueur L totale d'un barreau. Plus précisément le rapport entre ces deux longueurs vaut de préférence 0,23.

Pour exciter le résonateur il faut appliquer une différence de potentiel entre les électrodes. Sur la figure 2 on a représenté par le signe + les électrodes reliées à une première borne de la source de tension et par le signe - les électrodes reliées à la deuxième borne de la source de tension. Les électrodes appartenant à une même paire se faisant face sont portées au même potentiel. En particulier le potentiel des électrodes non représentées sur la face inférieure des barreaux est identique à celui des électrodes représentées sur la face supérieure et leur faisant face. En outre si deux électrodes d'une même paire sont portées à un premier potentiel les deux électrodes de la deuxième paire disposées au même niveau du barreau sont portées au potentiel opposé. Enfin si les électrodes supérieure et inférieure centrales sont portées à un premier potentiel les électrodes d'extrémité supérieure et inférieure sont portées au potentiel opposé.

On n'a pas représenté sur la figure 2 les interconnexions qui permettent de porter effectivement les différentes électrodes au potentiel requis. Il faut observer que, compte-tenu du nombre élevé d'électrodes, il est difficile de réunir entres elles les différentes électrodes à un même potentiel à l'aide de métallisations directement déposées sur le matériau piézo-électrique. C'est pourquoi il peut être intéressant de n'exciter que certaines de ces électrodes. Par exemple on peut exciter seulement les électrodes centrales ou seulement les électrodes d'extrémité. Il faut observer que dans ce cas la capacité dynamique du résonateur complet est divisée par deux. On peut encore exciter les électrodes centrales et une partie des électrodes d'extrémité.

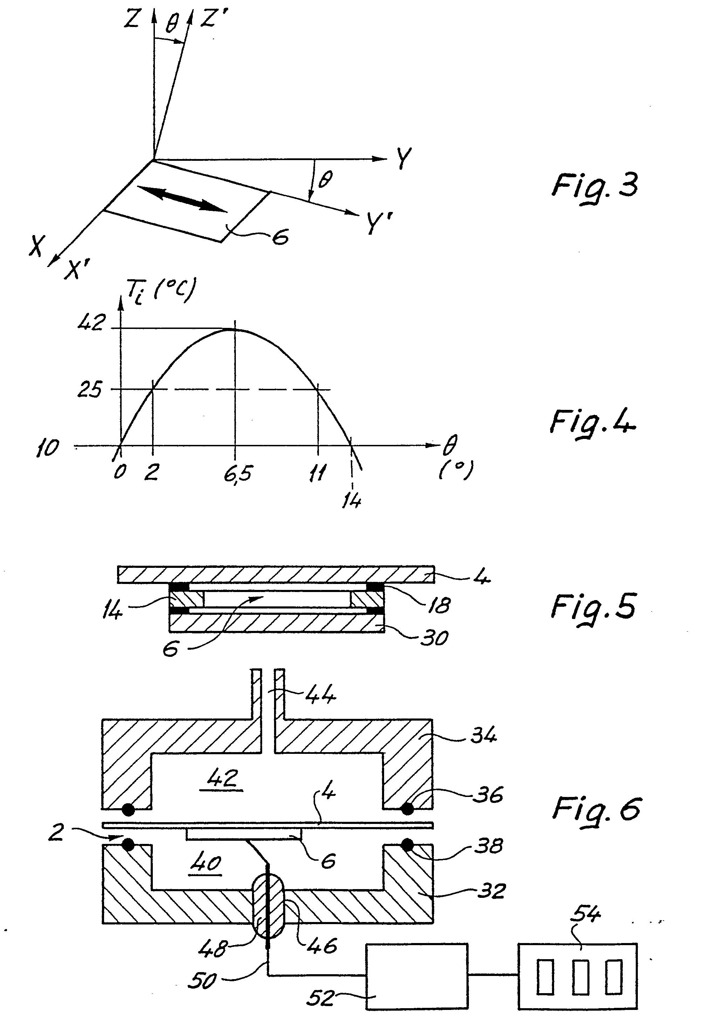

Selon une caractéristique particulièrement importante de l'invention le résonateur 6 est taillé selon une coupe telle que le coefficient de dilatation thermique du matériau piézo-électrique qui le constitue, selon la direction d'application de la contrainte, c'est-à-dire selon la direction des barreaux $C_1$ et $C_2$, soit identique ou très peu différent du coefficient de dilatation thermique du matériau constituant la plaque mince 4. Sur la figure 3 on a représenté de façon simplifiée le résonateur 6 repéré par rapport aux axes X, Y et Z du quartz, le résonateur étant bien sûr taillé dans ce même matériau. On appelle X', Y' et Z' les axes du résonateur après son taillage. Selon le mode de coupe de la figure 3 les axes X', Y' et Z' se déduisent des axes X, Y et Z par une rotation d'un angle $\theta$ autour de l'axe X. Le coefficient de dilatation thermique a duquartz est différent selon que l'on considère la dilatation selon l'axe X ou Y du quartz ou selon la direction Z du quartz. Dans le premier cas le coefficient vaut sensiblement $13,7 . 10^{-6}(°)^{-1}$ et dans le deuxieme cas il vaut sensiblement $7,5 . 10^{-6}(°C)^{-1}$ Le coefficient de dilatation thermique a du résonateur selon la direction d'application des contraintes est donc donné par la relation suivante en fonction de l'angle $\theta$ de coupe:

$$\alpha' = [7,5 + (13,7 - 7,5) \cos^2 \theta] . 10^{-6}(°C)^{-1}$$

Il apparaît ainsi qu'en choisissant l'angle de coupe de façon convenable on peut donner au coefficient a toutes les valeurs comprises entre 7,5 et 13,7 . 10 $(°C)^{-1}$. Il existe un grand nombre de métaux dont les coefficients de dilatation thermique sont compris entre ccs deux valeurs. On peut citer en particulier:

Acier "normal" AISI 1020 $\alpha = 12,1 . 10^{-6}(°C)^{-1}$
Fonte grise ASTM A48-48 $\alpha$ $\alpha = 12,1 . 10^{-6}(°)^{-1}$
Hastelloy C $\alpha = 11,3 . 10^{-6}(°C)^{-1}$
Inconel $\alpha = 13,3 . 10^{-6}t(°C)^{-1}$
Nickel $\alpha = 11,9 . 10^{-6}(°)^{-1}$

Il faut cependant observer qu'il est intéressant d'avoir un angle de coupe $\theta$ relativement faible pour deux raisons principales. Si l'angle $\theta$ est faible, d'une part, on reste très proche d'une coupe Z, ce qui est favorable pour l'attaque chimique permettant de tailler le quartz, d'autre part, cela est favorable du point de vue thermique. Il est bien connu que les résonateurs à quartz ont une caractéristique de variation relative de fréquence en fonction de la température qui, dans le cas d'un résonateur en flexion ou en allongement de coupe du type Z, a sensiblement la forme d'une parabole. Le sommet de cette parabole, habituellement appelé point d'inversion, correspond à une température dite température d'inversion (Ti). La figure 4 montre les variations de cette température d'inversion en fonction de l'angle $\theta$. On voit que, pour des angles $\theta$ compris entre 0 et 14°, la température d'inversion reste comprise entre 10 et 42°C. Pour diminuer au maximum l'effet de température il est intéressant que la température d'inversion soit comprise dans la plage de température d'utilisation normale du résonateur. Les températures comprises entre 10 et 42°C correspondent à cette définition. A titre d'exemple, pour un angle de coupe θ égal à 11°, ce qui donne une température d'inversion de 25°C, le coefficient α' de dilatation vaut 13,47 . $10^{-6}(°C)^{-1}$. En outre avec un angle θ faible on a une meilleure excitation du résonateur. Pour toutes ces raisons il est donc intéressant de se situer dans une plage voisine du maximum 13,7 . $10^{-6}$.

Il va de soi que, au lieu d'effectuer une rotation autour de l'axe X, on pourrait également effectuer une rotation autour de l'axe Y, la relation entre le coefficient a et l'angle O restant la même. On pourrait bien entendu également combiner une rotation autour de l'axe X puis une rotation autour de l'axe Y', l'angle θ restant l'angle entre les axes Z et Z'. Là encore la relation entre α' et θ demeure la même.

On sait qu'un diapason fonctionne de façon plus stable lorsqu'il est placé dans une enceinte dans laquelle règne un vide relativement poussé. Donc, si l'élément sensible représenté sur la figure 1 est monté dans un capteur de pression comportant une région maintenue sous vide et que le résonateur est situé dans cette région, il n'est pas nécessaire de modifier la structure de l'élément sensible par rapport à celle qui est représentée sur la figure 1. Si, au contraire, le résonateur se trouve dans une zone où il règne la pression atmosphérique ou plus généralement la pression à mesurer, il est intéressant de modifier l'élément sensible comme cela est représenté sur la figure 5. Selon ce mode de réalisation, le résonateur 6 est enfermé dans un boîtier étanche. Ce boîtier consiste en la plaque 4 elle-même, en le cadre 14 du résonateur qui est collé ou soudé sur la plaque par la couche 18, et en un couvercle 30 dont la périphérie est collée ou soudée sur le cadre 14. Bien entendu le couvercle 30 est réalisé avec le même matériau que la plaque 4 pour éviter les problèmes de dilatation thermique différentielle.

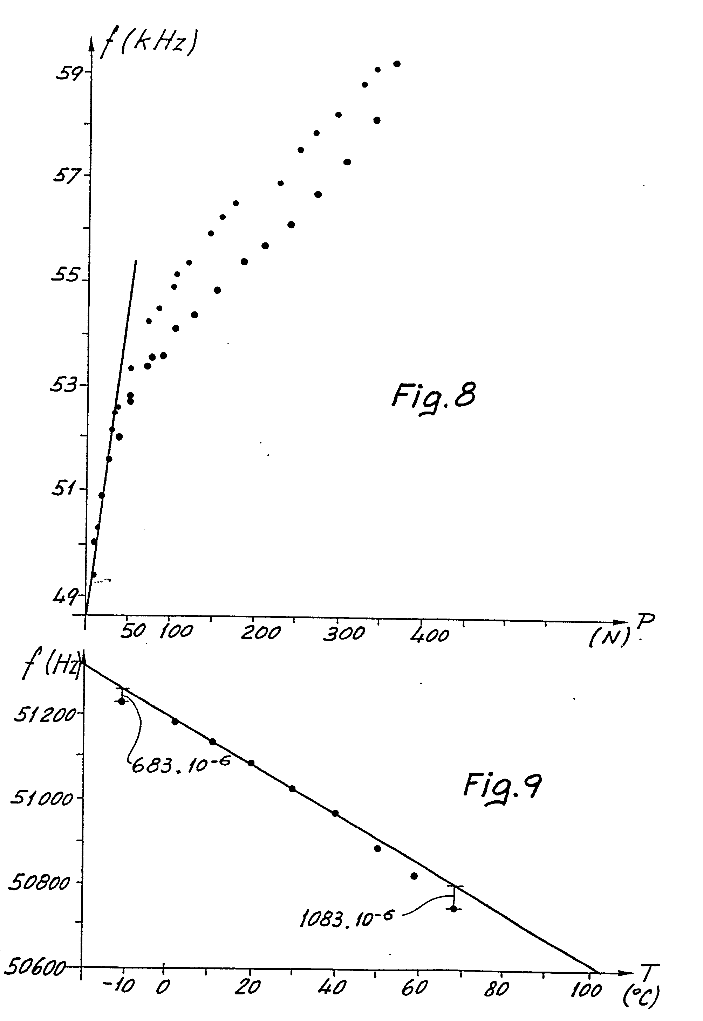

La figure 8 montre les effets d'une force sur un élément sensible constitué par un résonateur du type décrit précédemment collé sur un élément support formé par une plaque allongée d'Inconel dont l'épaisseur est de 300 μm et dont la longueur est de 100 mm et la largeur de 5,0 mm. La courbe de la figure 8 donne la variation de fréquence f en fonction de la force appliquée à la plaque métallique. On voit qu'on obtient une bonne linéarité entre 0 et 40 N. Cela donne une sensibilité d'environ 120 Hz par newton. Compte tenu des dimensions de la plaque métallique 4 et du résonateur cela donne une sensibilité de 2,5 . $10^{-8}$ par hertz pour le rapport entre la variation de la longueur relative et la variation de fréquence.

On voit donc qu'on obtient une très bonne sensibilité. Ce mode de réalisation de l'élément support est bien adapté au cas d'un élément sensible pour mesurer une force. Une extrémité de la plaque est fixe et la force à mesurer est appliquée à l'autre extrémité de la plaque.

La courbe représentée sur la figure 9, qui donne la fréquence, pour le même échantillon, exprimée en Hz en fonction de la température, met bien en lumière l'effet parasite très important résultant du fait que les coefficients de dilatation thermique sont différents pour le résonateur et pour la plaque métallique en Inconel. Bien que les coefficients de dilatation thermique soient relativement peu différents (13,3 . $10^{-6}$ et 13,7 . $10^{-6}$) on voit que la sensibilité à la temperature est supérieure à $10^{-4}(°C)^{-1}$ dans les régions les plus favorables. On comprend qu'en taillant le résonateur de telle manière que les coefficients de dilatation thermique du résonateur et de la plaque soient les mêmes cet effet thermique est supprimé. On évite ainsi le défaut essentiel couramment rencontré dans les capteurs de pression. Bien entendu il demeure la variation de fréquence du résonateur lui-même en fonction de la température. Cependant il faut rappeler que cet effet de température est seulement de l'ordre de 35 . $10^{-9}(°C)^{-2}$. Cet effet thermique parasite est donc négligeable si on le rapporte à la sensibilité de l'élément résonnant sous l'effet de la contrainte.

La figure 6 illustre en coupe verticale le montage de l'élément sensible de la figure 1 dans un capteur de pression. La plaque mince a alors la forme d'un disque dont le diamètre est par exemple de 20 mm.

L'appareil de mesure de pression est constitué par un boîtier formé d'un fond 32 et d'un couvercle 34. La périphérie de la plaque mince 4 de l'élément sensible est fixée de façon étanche entre les deux parties du boîtier. Des joints tels que 36 et 38 peuvent assurer cette étanchéité. La plaque mince 4 sépare l'intérieur du boîtier en une première chambre 40 qui est maintenue sous un vide poussé et en une deuxième chambre 42 qui communique par un conduit 44 avec l'enceinte dans laquelle on veut mesurer la pression. Le fond 32 est percé d'une traversée 46 dans laquelle est introduit un joint isolant et étanche 48 qui est traversé par un ensemble de conducteurs 50 reliés aux électrodes d'excitation du résonateur 6. A l'extérieur du boîtier, les conducteurs 50 arrivent dans un circuit de traitement et d'alimentation 52 qui commande des moyens d'affichage 54 de la valeur de la pression. On comprend aisément que dans un tel capteur de pression c'est la face libre de la plaque 4 qui est soumise à la pression à mesurer, son autre face, c'est-à-dire celle qui porte le résonateur, étant tournée vers l'enceinte 40 sous vide. La pression régnant dans la chambre 42 déforme la plaque 4 ce qui engendre l'application de contraintes au résonateur 6. Comme cela était expliqué précédemment, en mesurant la variation de fréquence propre du résonateur due à la pression on peut en déduire de façon linéaire la pression absolue régnant dans la chambre 42.

Pour faire une mesure de pression relative il suffit de mettre l'enceinte 40 à la pression atmosphérique. L'élément sensible doit alors avoir la structure représentée sur la figure 5.

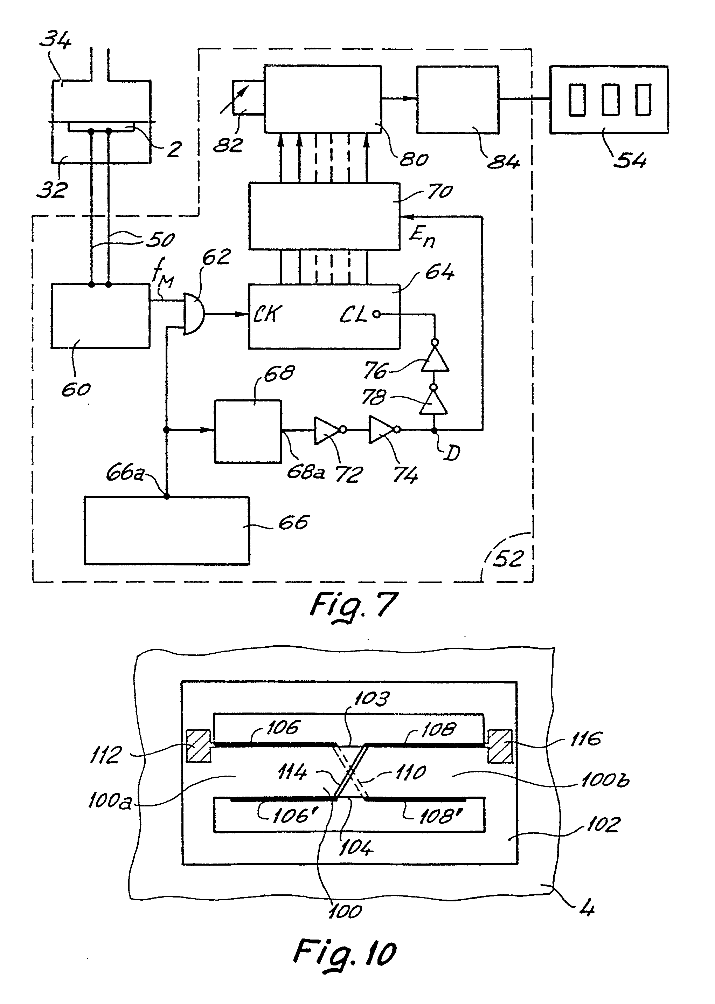

La figure 7 donne un mode de réalisation possible pour le circuit 52. Les conducteurs 50 sortant du boîtier 32, 34 sont reliés à l'entrée d'un circuit d'entretien 60 de type classique qui délivre à sa sortie un signal de fréquence $f_M$ correspondant à la fréquence de vibration du résonateur compte tenu de la pression régnant dans la partie supérieure 34 du boîtier. La sortie du circuit d'entretien 60 est reliée à l'une des entrées d'une porte ET 62 dont la sortie est reliée à l'entrée d'horloge CK d'un compteur 64. Le circuit 52 comprend également un générateur de signaux 66 qui délivre par exemple un signal de durée 1 00 millisecondes avec une période de 1 seconde. La sortie 66a du générateur 66 est reliée d'une part à la deuxième entrée de la porte 62 et d'autre part à l'entrée d'un circuit de détection 68 qui délivre sur sa sortie 68a une impulsion à l'apparition d'un front de descente des signaux délivrés par le générateur 66. Les sorties d'état du compteur 64 sont reliées aux entrées d'une mémoire commandable 70 munie d'une entrée d'activation En. La sortie 68a du circuit détecteur 68 est reliée à un point D par l'intermédiaire de deux inverseurs 72 et 74 qui ont pour but d'introduire un retard, par exemple de l'ordre de 10 microsecondes. Le point D est relié, d'une part, à l'entrée de remise à zéro du compteur 64 référencée CL par l'intermédiaire des deux inverseurs 76 et 78, qui ont ègalement pour but d'introduire un retard et, d'autre part, à l'entrée d'activation En de la mémoire commandable 70. Les signaux de sortie de la mémoire commandable 70 sont appliqués à l'entrée d'un circuit de calcul 80 muni de moyens d'introduction de paramètres 82. La sortie du circuit de calcul attaque un décodeur 84 qui commande lui-même les moyens d'affichage 54.

Le fonctionnement du circuit 52 découle clairement de la description précédente. Les impulsions du signal de fréquence $f_M$ sortant du circuit d'entretien 60 incrémentent le compteur 64 pendant la durée du signal périodique délivré par le générateur 66. A la fin de chaque signal délivré par le générateur 66, le circuit détecteur 68 délivre une impulsion qui est appliquée à l'entrée d'activation En de la mémoire commandable 70. Le contenu du compteur 64 est donc transféré dans la mémoire 70 puis le compteur 64 est remis à zéro par son entrée CL. La mémoire 70 contient donc sous forme binaire un nombre qui représente le nombre d'impulsions du signal $f_M$ pendant la durée du signal délivré par le générateur 60, c'est-à-dire, par exemple, pendant 100 millisecondes. Ce nombre est traité par le circuit de calcul 80 pour délivrer un nombre qui est directement représentatif de la pression. Le circuit de calcul est simple puisque la relation entre la fréquence $f_M$ et la pression est linéaire dans la plage de fonctionnement du dispositif. Le circuit de calcul a simplement pour but de soustraire un nombre donné correspondant à l'étalonnage de l'appareil et de diviser le nombre en résultant par un coefficient constant lié à la précision avec laquelle on veut afficher la pression. Ce fonctionnement correspond au cas de la mesure d'une pression absolue. La valeur de la pression est toujours positive. Dans le cas d'une mesure de pression relative, la pression mesurée peut être positive ou négative, c'est-à-dire que la valeur de

$$\frac{df}{f}$$

peut être positive ou négative. Il est alors necessaire que le circuit de calcul 80 comporte des moyens pour faire cette discrimination de signe. Il faut également que ces moyens envoient vers le circuit de décodage 84 une information de signe.

Il apparaît qu'ainsi le capteur de pression qui utilise l'élément sensible selon l'invention a une structure très simple du fait que, en particulier, il n'est pas nécessaire d'éliminer l'effet de température.

L'élément sensible peut également servir à mesurer des contraintes mécaniques correspondant à des déformations de pièces sous l'effet de charges. Dans ce sens l'élément sensible remplace ce qui est appelé habituellement une "jauge de contrainte". Cela signifie que l'élément support, c'est-à-dire la plaque mince, est collé sur une face de la pièce à tester. Pour s'affranchir des problèmes de dilatation thermique différentielle il faut bien sûr que l'élément support présente le même coefficient de dilatation thermique que la pièce à tester. La solution la plus simple est bien sûr de réaliser l'élément support, c'est-à-dire la plaque mince, avec le même matériau que la pièce. Les exemples de matériaux donnés précédemment montrent que les matériaux de construction habituels (acier, fonte eetc.) entrent bien dans ce cadre.

En outre l'épaisseur de l'élément support dépend bien sûr de la grandeur physique à mesurer et de l'intensité de cette grandeur. L'épaisseur de la plaque formant l'élément support peut être avantageusement comprise entre 100 et 2000 μm.

Il va de soi que d'autres résonateurs que celui qui est représenté sur la figure 1 peuvent être utilisés pour réaliser l'élément sensible. Par exemple sur la figure 10 on a représenté un autre résonateur convenant pour l'élément sensible. Il s'agit d'un barreau 100 réalisé par exemple en quartz et qui est encastrè à ses deux extrémités dans un cadre 102. Bien entendu le barreau 100 et le cadre 102 sont obtenus à partir d'une même plaquette de quartz attaquée chimiquement. Le barreau 100 est excité pour qu'à un même instant le demi-barreau 100a travaille en contraction et que le demi-barreau 100b travaille en allongement. Pour cela les flancs 103 et 104 du barreau 100 sont munis d'électrodes. Le demi-barreau 100a est muni des électrodes 106 et 106' tandis que le demi-barreau 100b est muni des électrodes 108 et 108'. Les électrodes 106 et 108' sont reliées entre elles par une métallisation 110 réalisée sur la face inférieure du barreau et sont alimentées par une borne 112. De même les électrodes 106' et 108 sont reliées entre elles par une métallisation 114 réalisée sur la face supérieure du barreau et sont reliées à une borne de connection 116. Ce résonateur est fixé sur la plaque 4 et il est taillé de telle manière que son coefficient de dilatation thermique dans le sens de sa longueur soit identique à celui de la plaque 4. Ce résultat est bien sûr obtenu par une coupe adéquate comme cela a été expliqué précédemment. L'élément sensible de la figure 10 peut être complété par un couvercle, comme cela a été représenté sur la figure 5 pour l'élément sensible de la figure 1. Pour cela le couvercle est collé de façon étanche sur la face supérieure du cadre 102, sa face inférieure étant collée sur la plaque 4.

Il faut encore ajouter que, bien entendu, la plaque 4 qui est en contact avec le milieu dont on veut mesurer la pression doit être réalisée en un matériau qui est compatible avec ce milieu. En particulier il devra éventuellement pouvoir résister à la corrosion. On comprend qu'il est toujours possible pour satisfaire à cette condition d'utiliser pour la plaque mince 4 une plaque de quartz dont la coupe est la même que celle du résonateur lui-même.

**Revendications**

1. Elément sensible pour capteur de contraintes comprenant un élément support (4), un résonateur allongé (6; 100) en matériau piézo-électrique et muni d'électrodes (20a à 24b; 106, 106', 108, 108'), et des moyens de fixation (18) du résonateur sur l'élément support pour transmettre audit résonateur, dans le sens de sa longueur, les contraintes appliquées audit élément support, caractérisé en ce que ledit résonateur (6; 100) est taillé dans ledit matériau piézo-électrique selon une coupe telle que son coefficient de dilatation thermique dans le sens de sa longueur soit sensiblement égal au coefficient de dilatation thermique $\alpha$ dudit élément support (4).

2. Elément selon la revendication 1, caractérisé en ce que ledit résonateur (6) a une forme sensiblement rectangulaire et est muni d'une fente centrale longitudinale, la longueur de la fente étant inférieure à celle du résonateur pour former une base ($A_1$, $B_1$) à chaque extrémité de celui-ci, les deux bases étant raccordées par deux barreaux parallèles ($C_1$, $C_3$) séparés par ladite fente et en ce que les électrodes (20a à 24'b) sont disposées pour faire vibrer ledit résonateur selon un mode principal de flexion.

3. Elément selon la revendication 2, caractérisé en ce que les moyens de fixation comprennent en outre un cadre entourant ledit résonateur, ledit résonateur étant raccordé audit cadre par ses bases ($A_1$ $B_1$), ledit résonateur et ledit cadre étant taillés dans une même plaquette de matériau piézo-électrique et ledit cadre étant fixé sur ledit élément support (4).

4. Elément selon la revendication 1, caractérisé en ce que ledit résonateur a la forme d'un barreau (100) muni d'électrodes (106 106', 108, 108') pour produire un allongement d'une moitié (100a) dudit barreau selon le sens de sa longueur pendant que l'autre moitié (100b) subit un raccourcissement, et en ce que lesdits moyens de fixation comprennent en outre un cadre (102) fixé sur ledit élément support (4), les extrémités dudit barreau étant solidaires dudit cadre et ledit barreau et ledit cadre étant taillés dans une même plaquette de matériau piézo-électrique.

5. Elément selon l'une quelconque des revendications 1 à 4, caractérisé en ce que ledit résonateur (6; 100) est en quartz et en ce que le coefficient $\alpha$ de dilatation thermique dudit élément support (4) est compris entre 7,5 et 13,7 . $10^{-6}(°C)^{-1}$.

6. Elément selon la revendication 5, caractérisé en ce que ledit résonateur (6; 100) a ses faces principales perpendiculaires à un axe Z' qui fait un angle $\theta$ avec l'axe Z du quartz, l'angle $\theta$ étant défini par la relation $\cos^2 \theta =$

$$\frac{10^{-6} \cdot \alpha - 7,5}{13,7 - 7,5} \; .$$

7. Elément selon la revendication 6, caractérisé en ce que ledit coefficient $\alpha$ est compris entre 13 et 13,7 . $10^{-6}(°C)^{-1}$

8. Elément sensible selon l'une quelconque des revendications 3 à 7, caractérisé en ce qu'il comprend en outre un couvercle (30) présentant sensiblement le même coefficient de dilatation thermique que le résonateur et fixé par sa périphérie de façon étanche sur ledit cadre (14; 102) et en ce que ledit cadre est fixé de façon étanche sur ledit élément support (4), l'enceinte limitée par ledit couvercle, ledit cadre et une partie dudit élément support et dans laquelle est logé ledit résonateur (6; 100) étant maintenue sous vide.

9. Capteur de pression comprenant un boîtier (32, 34) dont l'intérieur est divisé de façon étanche par une cloison déformable en une première chambre (40) et une deuxième chambre (42), des moyens (44) pour appliquer une pression à mesurer dans la deuxième chambre, un résonateur piézo-électrique (6; 100) logé dans l'une desdites chambres et fixé à la cloison et des moyens (52) pour faire vibrer le résonateur et recueillir un signal électrique représentatif de ladite pression à mesurer, caractérisé en ce que ladite cloison et ledit résonateur font partie d'un élément sensible conforme à l'une quelconque des revendications 1 à 7 dont l'élément support (4) est constitué par ladite cloison.

10. Capteur selon la revendication 9, caractérisé en ce que ledit résonateur (6; 100) est logé dans ladite première chambre (40) et en ce que celle-ci est maintenue sous vide.

## Patentansprüche

1. Empfindliches Element für einen Dehnungswandler umfassend ein Trägerelement (4), einen langgestreckten Resonator (6; 100) aus piezoelektrischem Material und versehen mit Elektroden (20a bis 24'b; 106, 106', 108, 108') und Mittel zur Befestigung (18) des Resonators auf dem Trägerelement zum Übertragen der an das besagte Trägerelement angelegten Dehnungen auf den besagten Resonator in Richtung seiner Länge, dadurch gekennzeichnet, daß der besagte Resonator (6; 10) aus dem besagten piezoelektrischen Material gemäß einem Zuschnitt derart ausgeschnitten ist, daß sein Wärmeausdehnungskoeffizient in Richtung seiner Länge im wesentlichen gleich dem Wärmeausdehnungskoeffizienten α des besagten Trägerelements (4) ist.

2. Element gemäß Anspruch 1, dadurch gekennzeichnet, daß der besagte Resonator (6) eine im wesentlichen rechteckige Form aufweist und mit einem zentralen Längsschlitz versehen ist, wobei die Länge des Schlitzes kleiner als diejenige des Resonators ist, um eine Basis (A1, $B_1$) an jedem Ende desselben zu bilden, wobei die beiden Basen durch zwei parallele Stäbe ($C_1$, $C_2$), getrennt durch den besagten Schlitz, verbunden sind, und daß die Elektroden (20a bis 24'b) angeordnet sind, um den besagten Resonator hauptsächlich durch Biegung schwingen zu lassen.

3. Element gemäß Anspruch 2, dadurch gekennzeichnet, daß die Mittel zur Befestigung zudem einen Rahmen umfassen, der den besagten Resonator umgibt, wobei der besagte Resonator mit dem besagten Rahmen durch seine Basen ($A_1$, $B_1$) verbunden ist, wobei der besagte Resonator und der besagte Rahmen aus der gleichen Platte aus piezo-elektrischem Material geschnitten sind und der besagte Rahmen auf dem besagten Trägerelement (4) befestigt ist.

4. Element gemäß Anspruch 1, dadurch gekennzeichnet, daß der besagte Resonator die Form eines Stabes (100) besitzt und mit Elektroden (106, 106', 108, 108') zum Erzeugen einer Dehnung einer Hälfte (100a) des besagten Stabes in Richtung seiner Länge versehen ist während die andere Hälfte (100b) einer Verkürzung unterworfen ist und daß die besagten Befestigungsmittel zudem einen Rahmen (102) umfassen, der auf dem besagten Trägerelement (4) befestigt ist, wobei die Enden des besagten Stabes fest mit dem besagten Rahmen ausgebildet und der besagte Stab und der besagte Rahmen aus einer gleichen Platte aus piezo-elektrischem Material geschnitten sind.

5. Element gemäß einem der Ansprüche 1 bis 4, dadurch gekennzeichnet, daß der besagte Resonator (6; 100) aus Quarz ist und daß der Wärmedehnungskoeffizient α des besagten Trägerelements (4) zwischen 7,5 und 13,7 . $10^{-6}(^\circ C)^{-1}$ liegt.

6. Element nach Anspruch 5, dadurch gekennzeichnet, daß der besagte Resonator (6; 100) seine Hauptflächen senkrecht zu einer Achse Z' hat, die einen Winkel θ mit der Achse Z des Quarzes aufweist, wobei der Winkel θ definiert ist durch die Relation $\cos^2 \theta =$

$$\frac{10^{-6} \cdot \alpha - 7,5}{13,7 - 7,5} \, .$$

7. Element gemäß Anspruch 6, dadurch gekennzeichnet, daß der besagte Koeffizient α zwischen 13 und 13,7. $10^{-6}(^\circ C)^{-1}$ liegt.

8. Empfindliches Element gemäß einem der Ansprüche 3 bis 7, dadurch gekennzeichnet, daß es zudem eine Abdeckung (30) aufweist, die im wesentlichen den gleichen Wärmeausdehnungskoeffizienten wie der Resonator aufweist und an ihrem Umfang dicht auf dem besagten Rahmen (14; 102) befestigt ist, und daß der besagte Rahmen dicht auf dem besagten Trägerelement (4) befestigt ist, wobei der geschlossene Raum, begrenzt durch den besagten Deckel, den besagten Rahmen und einen Teil des besagten Trägerelements, in welchem der besagte Resonator (6; 100) angeordnet ist, unter Vakuum gehalten ist.

9. Druckwandler umfassend ein Gehäuse (32, 34), dessen Inneres durch eine deformierbare Trennwand in eine erste Kammer (40) und eine zweite Kammer (42) in dichter Weise getrennt ist, Mittel (44) zum Anlegen eines zu messendes Drucks an die zweite Kammer, einen piezoelektrischen Resonator (6; 100), der in einer der Kammern angeordnet und an der Trennwand befestigt ist, und Mittel (52) zum Schwingenlassen des Resonators und Gewinnen eines elektrischen Signals, das für den besagten zu messenden Druck repräsentativ ist, dadurch gekennzeichnet, daß die besagte Zwischenwand und der besagte Resonator Teil eines empfindlichen Elements gemäß einem der Ansprüche 1 bis 7 bildet, deren Trägerelement (4) durch die besagte Zwischenwand gebildet wird.

10. Wandler gemäß Anspruch 9, dadurch gekennzeichnet, daß der besagte Resonator (6; 100) in der besagten ersten Kammer (40) angeordnet ist und daß diese unter Vakuum gehalten wird.

## Claims

1. A sensitive element for a strain sensor, comprising a support element(4), an elongated resonator (6; 1OO) made of piezoelectric material and provided with electrodes (20-2Y' b; 106, 106', 108, 108) and means for securing the resonator to the support element for transmitting to the resonator, lengthwise thereof, strains applied to said support element, characterised in that said resonator (6; 100) is so cut in said piezoelectric material that is coefficient of thermalexpansion longitudinally thereof is substantially equal to the coefficient of thermal expansion α of said support element (4).

2. An element as in claim 1, characterised in that said resonator is of substantially rectangular shape and is formed with a central, longitudinal, slot, the length of the slot being less than that of the resonator to define a base $(A_1, B_1)$ at each end of the latter, both bases being connected by two parallel bars $(C_1, C_2)$ separated by said slot, and in that the electrodes $(20_a-24'b)$ are so arranged as to cause said resonator to vibrate according to a fundamental mode of flexion.

3. An element as in claim 2, characterised in that the securing means further include a frame surrounding said resonator, said resonator being connected to said frame by its base; $(A_1, B_2)$, said resonator and said frame being cut in a common plate of piezoelectric material and said frame being secured to said support element (3).

4. An element as in claim 1, characterised in that said resonator is in the form of a bar (100) provided with electrodes (106, 106',108, 108')such as to lenghen one half (100a) of said rod in its longitudinal direction while at the same time shortening the other half (100b), and in that said securing means further include aframe (102) secured to said support element (4), the ends of said bar being rigid with said frame and said bar and said frame being cut in a common plate of piezoelectric material

5. An element as in any one of claims 1 to 4, characterised in that said resonator (6;100)is of quartz and in that the coefficient α thermal expansion of said support element (4) ranges from 7-5 to 13-7 10-6(°C)-1

6. An element as in claim 5, characterised in that the main surfaces of said resonator(6;100) are at right angles to an axis Z' that forms an angle θ with the Z-axis to the quartz, the angle α being defined by the relationship

$$\cos^2\theta = \frac{10^{-6} \cdot \alpha - 7.5}{13.7 - 7.5}$$

7. An element as in claim 6, characterised in that said coefficient lies between 13 and 13.7 . 10-6(°C)-1.

8. An element as in any one of claims 3 to 7, characterised in that it further comprises a cover (30) having substantially the same coefficient of thermal expansion as the resonator and which is secured by its periphery in fluid tight manner to said frame (14;102) and in that said frame is secured in fluid tight manner to said support element (4) the space enclosed by said cover, said frame and a part of said support element and in which said resonator (6;100)is housed being evacuated.

9. A pressure sensor comprising a casing (32, 34) whose interior is divided in fluid tight manner by a deformable partition into a first chamber (40) and a second chamber (42), means (44) for applying a pressure to be measured in the second chamber, a piezoelectric resonator (6;100) which is housed in one of said chambers and which is secured to the partition, and means (52) for vibrating the resonator and for receiving an electric signal that is representative of said pressure to be measured, characterised in that said partion and said resonator form part of a sensitive element as in any one of claims 1 to 7, the support element (4) there of being formed by said partition.

10. A sensor as in claim 9, characterised in that said resonator (6; 100O) is housed in said first chamber (40) and in that the latter is evacuated.

0 098 796

Fig.1

Fig.2

1

Fig.3

Fig.4

Fig.5

Fig.6

**Fig. 7**

**Fig. 10**

Fig.8

Fig.9